# EUROPEAN PATENT APPLICATION

(11) **EP 1 841 115 A2**
(43) Date of publication of application: **03.10.2007**
(21) Application number: 06253019.1
(22) Date of filing: 12.06.2006
(51) Int. Cl.: H04L 1/00

(54) **Base station apparatus, terminal and bandwidth control method**

(30) Priority: 27.03.2006 JP 2006085782
(71) Applicant: Fujitsu Ltd., Kawasaki-shi, Kanagawa 211-8588 (JP)
(72) Inventor: Nakatsugawa, Keiichi, c/o Fujitsu Limited, Kawasaki-shi Kanagawa 211-8588 (JP)
(74) Representative: Hitching, Peter Matthew

(57) **Abstract**

A terminal-type judging unit (4) judges whether a terminal is a mobile terminal or a fixed terminal. For a connection with the fixed terminal, an acceptance judging unit (6) and a scheduling unit (3) convert a requested bandwidth into a first resource amount using a modulation scheme used at the time of receiving a bandwidth reservation request and reserve the first resource amount. For a connection with the mobile terminal, the acceptance judging unit (6) and the scheduling unit (3) convert a requested bandwidth into a second resource amount using the slowest modulation scheme and reserve the second resource amount. If a higher-speed modulation scheme is usable for the connection with the mobile terminal, the scheduling unit assigns a difference between a resource amount for using the higher-speed modulation scheme and the second resource amount, to a best-effort-type connection.

## Description

### CROSS-REFERENCE TO RELATED APPLICATIONS

This application is based upon and claims the benefit of priority from the prior Japanese Patent Application No. 2006-085782, filed on March 27, 2006, the entire contents of which are incorporated herein by reference.

### BACKGROUND OF THE INVENTION

### 1. Field of the Invention

The present invention relates to a base station apparatus, a terminal, and a bandwidth control method with which bandwidth-guaranteed communication is realized.

### 2. Description of the Related Art

In general, in a radio communication system, the quality of the radio channel at a terminal such as the received radio field intensity, signal-to-interference and noise power ratio (SINR), carrier-to-interference plus noise ratio (CINR) is improved as the location of the terminal gets closer to a radio base station. In a communication system using an adaptive modulation scheme, the modulation scheme is automatically switched depending on the quality of the radio channel.

For example, when the quality of the radio channel is excellent, no re-transmission due to a transmission error tends to occur. Therefore, a modulation scheme having a high modulation speed such as "64-quadrature amplitude modulation (QAM)", "16-QAM", etc. is used. When the quality of the radio channel is poor, a modulation scheme having higher resistance against transmission errors, though having a low modulation speed, such as QPSK, BPSK, etc., is used. A radio base station executes assignment scheduling of radio resources to transmit packets addressed to each terminal. The throughput of a connection of each terminal is determined based on this scheduling and the modulation scheme used for each terminal such as 64-QAM, 16-QAM, etc.

As a radio communication system using an adaptive modulation scheme, high speed downlink packet access (HSDPA) is known (for example, Vehicular Technology Conference, 2002 Proceedings VTC 2002-Fall 2002 IEEE 56th, US, 2002, Vol. 1, pp. 477 to 481 "Performance Aspects of WCDMA Systems with High Speed Downlink Packet Access (HSDPA)" by Troels E. Kolding et al.). HSDPA is standardized by 3GPP that is a standardizing organization concerning mobile communication systems. In HSDPA, traffic of user connections is all handled as that of best-effort communication. Downlink packets from a radio base station to a user are scheduled and transmitted at the radio base station that uses the adaptive modulation scheme.

The adaptive modulation scheme is also employed in 802.16 (so-called worldwide interoperability for microwave access (WiMAX)) that is currently being standardized by IEEE. WiMAX supports not only best-effort type communication but also quality of service (QoS)-class communication such as bandwidth-guaranteed communication that always assigns a specific bandwidth to a terminal. WiMAX is directed to both of 802.16d specifications for fixed wireless access (FWA) and 802.16e specifications for mobile communication.

A method of executing priority control scheduling for best-effort communication is known. For example, a method of scheduling packet transmission is known, that includes steps of storing a plurality of packet flows input in parallel to each other, into a buffer that is for packets that are waiting for themselves to be output and is for each of the plurality of packet flows; determining output priority of each packet based on any one of the conditions: the packet priority, transmission path quality, and the length of a queue that is notified of from buffer monitoring unit; estimating assignable radio resources; and assigning the estimated assignable radio resources to the packet flow stored in the packet buffer (for example, Japanese Patent Application Laid-Open Publication No. 2003-229896).

As a method of executing priority control scheduling for best-effort communication, the following method is known. For example, a communication method according to which a base station obtains a packet transmitted from a terminal apparatus to a mobile station and transmits the packet to the mobile station is known. The method includes steps of obtaining the packet from the terminal apparatus; calculating priority for transmitting the obtained packet to the mobile station; weighting the calculated priority of the packet; assigning a channel for transmitting the packet to the mobile station; and transmitting the packet to the mobile station on the assigned channel (for example, Japanese Patent Application Laid-Open Publication No. 2003-229894).

As a method of executing priority control scheduling for best-effort communication, the following method is known. For example, a radio resource control method between a radio-transmitting apparatus to radio-transmit a plurality of packet flows having a predetermined transmission capacity and a radio-receiving apparatus to radio-receive the packet flows is known. The method includes a dividing step at which the radio-transmitting apparatus divides radio resources having elements of a multi-dimensional space into a plurality of unit radio resource corresponding to each base of the multi-dimensional space; and an assigning step of assigning radio resources that have been weighted by weighting coefficients determined by a transmission state, to each of the plurality of unit radio resource divided at the dividing step, for the plurality of packet flows (for example, Japanese Patent Application Laid-Open Publication No. 2005-117579).

As a method of executing priority control scheduling considering a request for the minimum bandwidth guarantee, the following method is known. For example, a packet priority control method of executing priority control to input packets is known, that includes steps of classifying the input packets into groups respectively having different priority in terms of tiers, according to the minimum transmission rate requested by each call; forming one queue respectively for the classified groups that need not to consider other factors; forming a queue for each call for groups that need to consider other factors and setting priority of these groups as priority of the queues formed for each call; when priority is determined for the priority of the queues formed for each call considering other factors, increasing or decreasing the priority for each call based on the other factors of packets to be stored in each queue; and determining the priority for the input packets according to the above operations (for example, Japanese Patent Application Laid-Open Publication No. 2005-86216).

The conventional adaptive modulation systems described above have the following problems. For example, assuming that all assignable radio resources per unit time at a radio base station are 100k slots and the total of radio resources being used to guarantee bandwidths of four mobile terminals A, B, C, and D at a time point is 70k slots, and later, two of the mobile terminals A and B move and the quality of the radio channels of the two terminals is degraded.

Therefore, it is also assumed that, at the mobile terminal A, the modulation scheme has been switched from 64-QAM to quadrature phase shift keying (QPSK) and the assigned amount of the radio resources needs to be increased from 10k slots to 30k slots to guarantee the same bandwidth as that for 64-QAM; and, at the mobile terminal B, the modulation scheme has been switched from 16-QAM to QPSK and the assigned amount of the radio resources needs to be increased from 15k slots to 30k slots to guarantee the same bandwidth as that for 16-QAM.

In the above example, the total of the radio resources necessary for the four mobile terminals after their move is 105k slots and exceeds the total assignable resource amount of the radio base station. Therefore, resources are not sufficient and the original bandwidths can not be guaranteed respectively for all the mobile terminals. That is, the conventional adaptive modulation systems have a problem that a QoS service such as that of unsolicited grant service (UGS) class in WiMAX, that is, a service that guarantees a bandwidth and a desired throughput for each connection can not be provided.

This is also true for the techniques disclosed in Japanese Patent Laid-Open Nos. 2003-229896, 2003-229894, and 2005-117579, and those techniques have a problem that a service that guarantees a bandwidth can not be provided. Because Japanese Patent Laid-Open No. 2005-86216 does not refer to guarantee of bandwidths executed when a mobile terminal has moved, no bandwidth can be guaranteed when the mobile terminal has moved. In addition, none of the above patent documents refer to assignment of radio resources executed distinguishing between a mobile terminal and a fixed terminal.

### SUMMARY OF THE INVENTION

It is an object of the present invention to at least solve the above problems in the conventional technologies.

A base station apparatus according to one aspect of the present invention communicates with a terminal, using a modulation scheme that is switched according to communication quality. The base station apparatus includes a receiving unit configured to receive a bandwidth reservation request from the terminal; a terminal-type judging unit configured to judge a type of the terminal based on the bandwidth reservation request; and an acceptance judging unit configured to judge whether to accept the bandwidth reservation request. When the terminal is judged to be a fixed terminal, the acceptance judging unit converts a bandwidth requested in the bandwidth reservation request into a first resource amount necessary for a modulation scheme that has been used at the time of receiving the bandwidth reservation request, and judges whether to accept the bandwidth reservation request based on the first resource amount. When the terminal is judged to be a mobile terminal, the acceptance judging unit converts the bandwidth requested in the bandwidth reservation request into a second resource amount necessary for a slow modulation scheme among a plurality of modulation schemes, and judges whether to accept the bandwidth reservation request based on the second resource amount.

A terminal according to another aspect of the present invention communicates with a base station apparatus, using a modulation scheme that is switched according to communication quality. The terminal transmits identification information indicating that the terminal is a mobile terminal to the base station apparatus when the terminal makes a bandwidth reservation request to the base station apparatus.

A terminal according to still another aspect of the present invention communicates with a base station apparatus, using a modulation scheme that is switched according to communication quality. The terminal transmits identification information indicating that the terminal is a fixed terminal to the base station apparatus when the terminal makes a bandwidth reservation request to the base station apparatus.

A bandwidth control method according to still another aspect of the present invention is used in a communication using a modulation scheme that is switched according to a communication quality. The bandwidth control method includes receiving a bandwidth reservation request from a terminal; judging a type of the terminal; converting a bandwidth requested in the bandwidth reservation request into a resource amount; and judging whether to accept the bandwidth reservation request based on the resource amount. When the terminal is judged to be a fixed terminal at the judging a type, the converting includes converting the bandwidth into a first resource amount necessary for a modulation scheme that has been used at the time of receiving the bandwidth reservation request, and the judging whether to accept the bandwidth reservation request includes judging based on the first resource amount. When the terminal is judged to be a mobile terminal, the converting includes converting the bandwidth into a second resource amount necessary for a slow modulation scheme among a plurality of modulation schemes, and the judging whether to accept the bandwidth reservation request includes judging based on the second resource amount.

The other objects, features, and advantages of the present invention are specifically set forth in or will become apparent from the following detailed description of the invention when read in conjunction with the accompanying drawings.

### BRIEF DESCRIPTION OF THE DRAWINGS

Fig. 1 is a block diagram of a base station apparatus according to embodiments of the present invention;
Fig. 2 is illustrates a connection administration table;
Fig. 3 illustrates a connection administration table;
Fig. 4 is a schematic for illustrating resource assignment;
Fig. 5 is a schematic for illustrating resource assignment;
Fig. 6 is a schematic for illustrating resource assignment;
Fig. 7 is a schematic for illustrating resource assignment;
Fig. 8 is a schematic for illustrating resource assignment;
Fig. 9 is a schematic for illustrating resource assignment;
Fig. 10 illustrates a connection starting sequence;
Fig. 11 is a flowchart of an acceptance judging process;
Fig. 12 is a flowchart of a radio-resource-assignment scheduling process; and
Fig. 13 is a schematic for illustrating a radio resource assignment executed at the time of establishing connection between a terminal and a base station.

### DETAILED DESCRIPTION OF THE PREFERRED EMBODIMENTS

Exemplary embodiments according to the present invention will be explained in detail below with reference to the accompanying drawings.

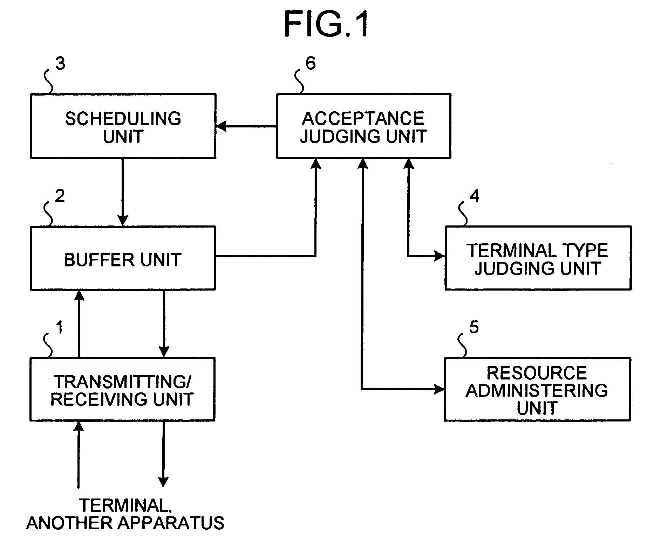

Fig. 1 is a block diagram of a base station apparatus according to the embodiments of the present invention. As shown in Fig. 1, the base station apparatus includes a transmitting/receiving unit 1, a buffer unit 2, a scheduling unit 3, a terminal-type judging unit 4, a resource administering unit 5, and an acceptance judging unit 6. The transmitting/receiving unit 1 communicates data with a terminal or another apparatus through a radio link or a wired link. The transmitting/receiving unit 1 receives, from the terminal, a control message such as a connection establishment request, and a request for bandwidth guarantee at the time of establishment of connection (bandwidth reservation request).

The buffer unit 2 temporarily retains data received by the transmitting/receiving unit 1. The buffer unit 2 delivers to the acceptance judging unit 6 the control message. The buffer unit 2 reads the data based on an instruction from the scheduling unit 3, creates a radio frame using the data, and delivers the radio frame to the transmitting/receiving unit 1.

Based on the message from the terminal, the terminal-type judging unit 4 judges whether the terminal is a fixed terminal, assuming that a location of the terminal is not frequently changed, or a mobile terminal that is movable. For example, a fixed terminal includes a conventional subscriber telephone and a floor-type computer equipped with a communication function. A mobile terminal includes, for example, a portable computer equipped with a communication function, personal digital assistants (PDA), and a portable telephone.

When the terminal-type judging unit 4 has received, from a terminal, identifying information indicating that the terminal is a mobile terminal, the terminal type judging unit 4 judges that the terminal is a mobile terminal and when the terminal type judging unit 4 has received, from a terminal, identifying information indicating that the terminal is a fixed terminal, the terminal type judging unit 4 judges that the terminal is a fixed terminal. When the terminal is a mobile terminal, the terminal transmits, to the base station apparatus, the identifying information indicating that the terminal is a mobile terminal and, when the terminal is a fixed terminal, the terminal transmits, to the base station apparatus, the identifying information indicating that the terminal is a fixed terminal.

Otherwise, when the terminal-type judging unit 4 has received, from the terminal, identifying information indicating that the terminal is a mobile terminal, the terminal type judging unit 4 may judge the terminal is a mobile terminal and, when the terminal type judging unit 4 have received from the terminal no identifying information, the terminal type judging unit 4 may judge the terminal is a fixed terminal. In this case, when the terminal is a mobile terminal, the terminal transmits identifying information indicating that the terminal is a mobile terminal to the base station apparatus and, when the terminal is a fixed terminal, the terminal transmits no identifying information to the base station apparatus.

When the terminal-type judging unit 4 has received, from the terminal, the identifying information indicating that the terminal is a fixed terminal, the terminal type judging unit 4 may judge the terminal is a fixed terminal and, when the terminal type judging unit 4 has received from the terminal no identifying information indicating the terminal type, the terminal type judging unit 4 may judge the terminal is a mobile terminal. When the terminal is a fixed terminal, the terminal transmits identifying information indicating that the terminal is a fixed terminal to the base station apparatus and, when the terminal is a mobile terminal, the terminal transmits no identifying information to the base station apparatus. When the communication system used is WiMAX, the terminal type may be judged utilizing the version information of a MAC header because 802.16d (FWA) and 802.16e (mobile) can be identified based on the version information of the MAC header.

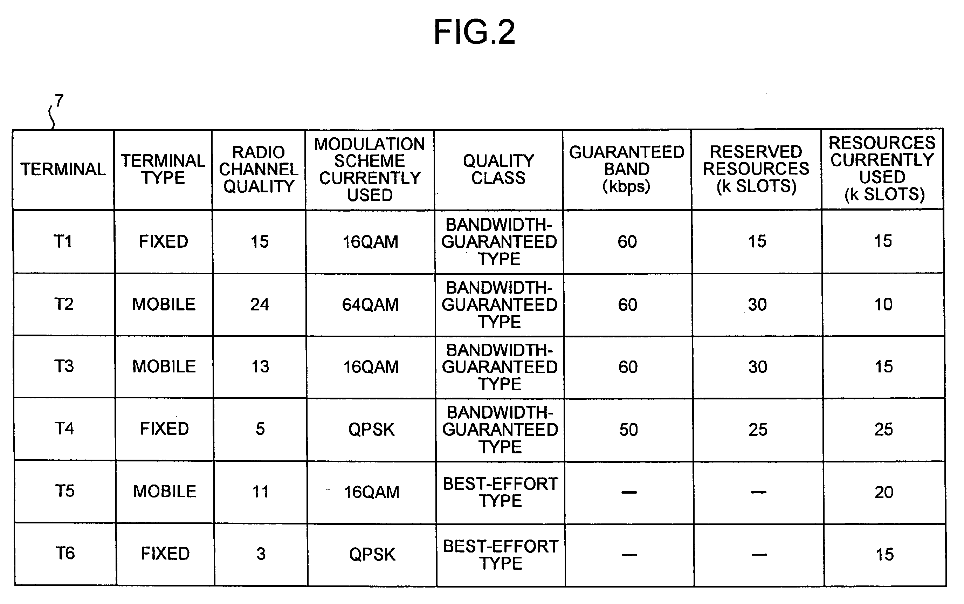

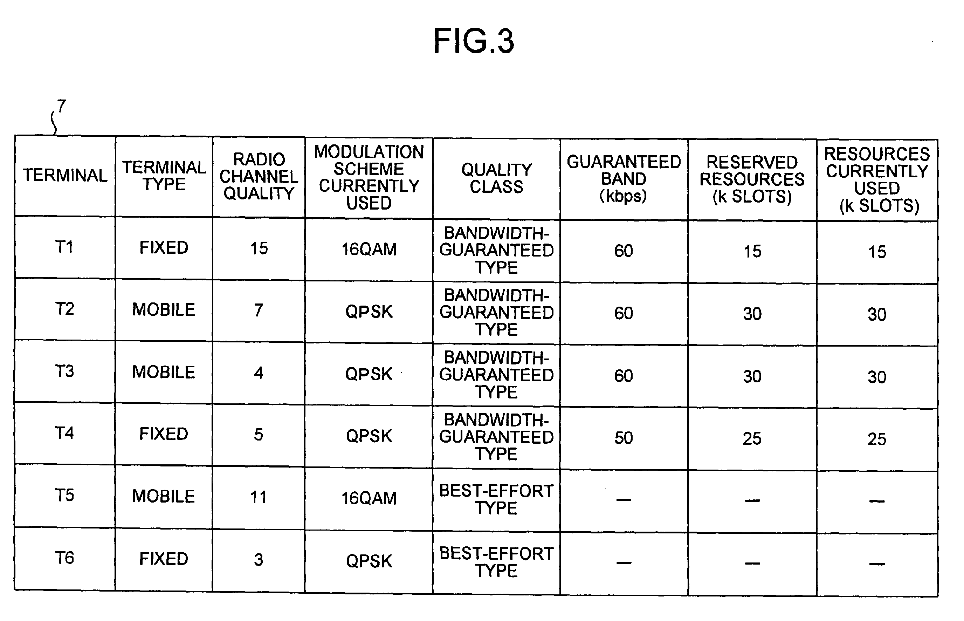

The resource administering unit 5 creates a connection administration table, and administers all the radio resources at the base station apparatus and the amount of the radio resources for which the bandwidths have been reserved. In the connection administration table, type of the terminal, quality of the radio channel, the modulation scheme currently used, the quality class, the guaranteed bandwidth, the amount of reserved resources per unit time, and the amount of resources currently used per unit time are registered for each terminal (see Fig. 2 or Fig. 3).

In response to the request for bandwidth guarantee, the acceptance judging unit 6 judges whether assignment of radio resources for the requested bandwidth is possible based on the terminal type judged by the terminal-type judging unit 4 and the availability of the radio resources administered by the resource administering unit 5. The acceptance judging unit 6 returns the judgment result to the terminal.

For example, when the terminal has been judged to be a fixed terminal, the acceptance judging unit 6 converts the requested bandwidth of the fixed terminal into the amount of resources necessary for using the modulation scheme used for receiving the bandwidth reservation request from the fixed terminal. The acceptance judging unit 6 checks the available resource amount by referring to the resource administering unit 5 and, when a resource amount larger than the resource amount obtained by the conversion of the requested bandwidth is available, the acceptance judging unit 6 accepts the bandwidth reservation request from the fixed terminal. When the available resource amount is insufficient, the acceptance judging unit 6 can not accept the bandwidth reservation request.

When the terminal is judged to be a mobile terminal, the acceptance judging unit 6 converts the requested bandwidth of the mobile terminal into the amount of resources necessary for using the slowest modulation scheme in a plurality of modulation schemes that the base station apparatus can employ. Similarly to the case of the fixed terminal, when a resource amount larger than the resource amount obtained by the conversion of the requested bandwidth is available, the acceptance judging unit 6 accepts the bandwidth reservation request from the mobile terminal, and when the available resource amount is insufficient, the acceptance judging unit 6 does not accept the bandwidth reservation request.

The scheduling unit 3 determines a modulation scheme and assigns radio resources according to the type of an established connection and the quality of a radio channel of a terminal. The scheduling unit 3 determines a modulation scheme as follows. For a connection for which a bandwidth reservation request from a fixed terminal has been accepted, the modulation scheme is determined to be the modulation scheme used for receiving the bandwidth reservation request from the fixed terminal. The scheduling unit 3 modulates data in the determined modulation scheme and assigns resources necessary for data transfer with the fixed terminal.

For a connection for which a bandwidth reservation request from a mobile terminal has been accepted, when a high-speed modulation scheme rather than the slowest modulation scheme can be used, the modulation scheme is determined to be the high-speed modulation scheme, and when the high-speed modulation scheme can not be used, the modulation scheme is determined to be the slowest modulation scheme. The scheduling unit 3 modulates data according to the determined modulation scheme and assigns resources necessary for transferring the data with the mobile terminal.

When resources are assigned using the high-speed modulation scheme to the connection for which a bandwidth reservation request from a mobile terminal has been accepted, the assigned resource amount is smaller than the resource amount assigned using the slowest modulation scheme. That is, excessive resources are generated. To utilize the excessive resources effectively, the scheduling unit 3 has a function that assigns the excessive resources to connections with other terminals such as best-effort connections.

When the communication system is WiMAX, the radio base station executes scheduling for both of uplink and downlink packets. Therefore, in WiMAX, the scheduling unit 3 may execute not only the assignment of resources in the scheduling of downlinks from the radio base station to a terminal but also assignment of resources in the scheduling of uplinks from a terminal to the radio base station. This can be similarly applied to other communication systems not limiting to WiMAX, and the base station may assign resources for uplinks.

Fig. 2 and Fig. 3 illustrate a connection administration table. In the present embodiment, the amount of the total radio resources of the base station assignable per unit time is assumed to be 100k slots. A connection administration table 7 shown in Fig. 2 shows a state where available slots are assigned to terminals T5 and T6 of which the quality class is "best effort" because the total of the resource amounts per unit time used by terminals T1, T2, T3, and T4 of which the quality class is "bandwidth guaranteed" is less than 100k slots.

Another connection administration table 7 shown in Fig. 3 shows a state where no resources are assigned to the terminals T5 and T6 because the total of the resource amounts per unit time used by terminals T1, T2, T3, and T4 is 100k slots and, therefore, no slot is available. In Fig. 2 and Fig. 3, the indices of the quality of the radio channel are represented by simple numerical values. However, as actual indices, values of SINR or CINR, or normalized values thereof are used. To simplify, in the embodiment, the modulation scheme is correlated only with the quality of the radio channel. However, the modulation scheme may be correlated with a combination of forward error correction (FEC) and the encoded rate thereof. This combination is referred to as modulation and coding scheme (MCS), or as BurstProfile in WiMAX.

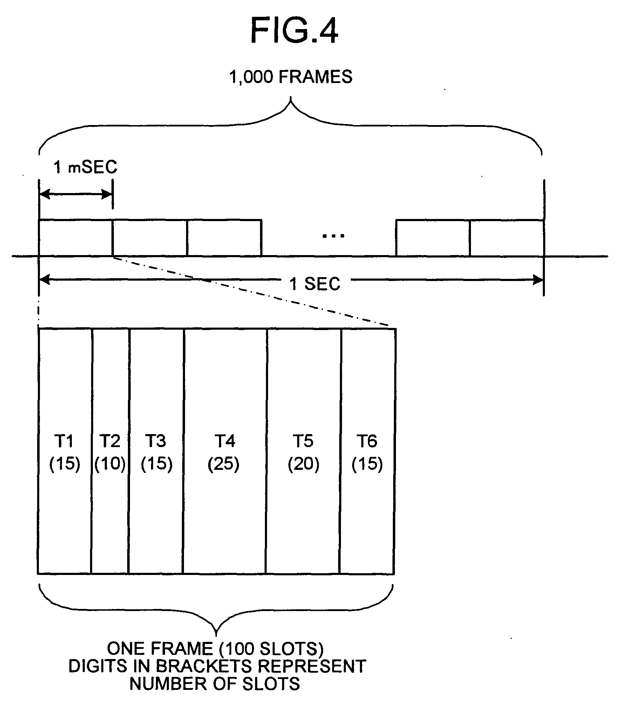

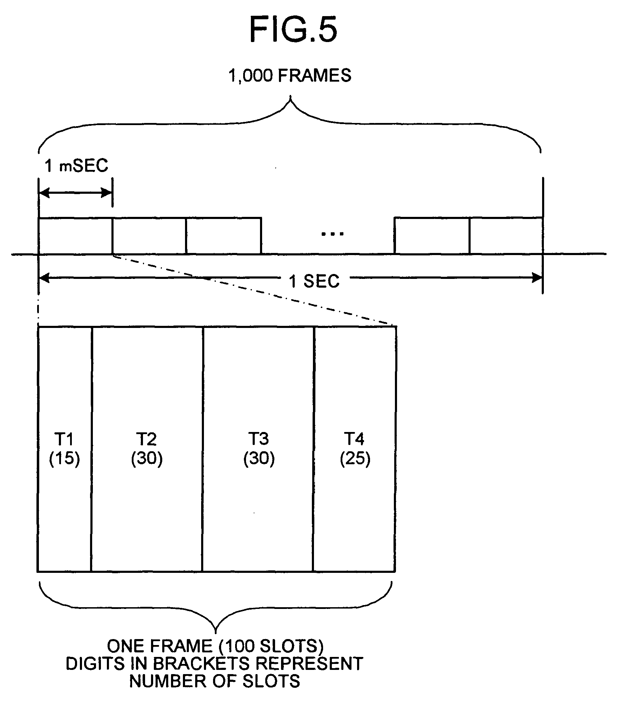

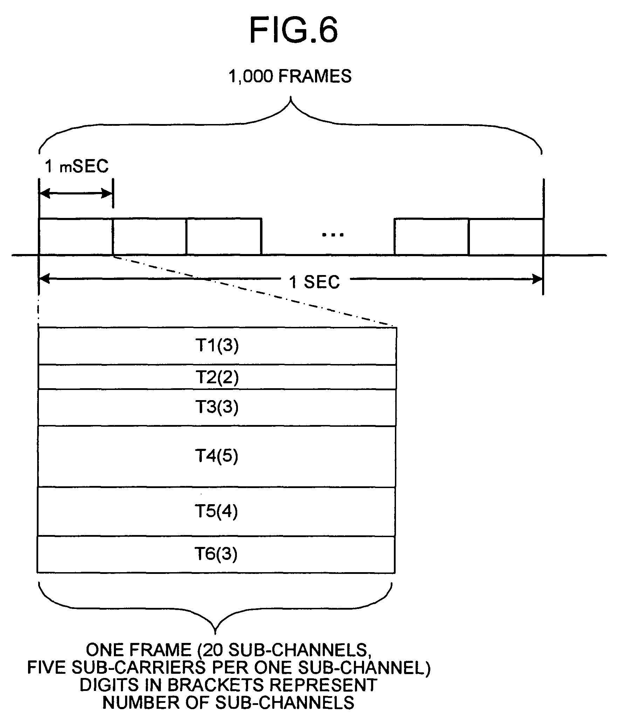

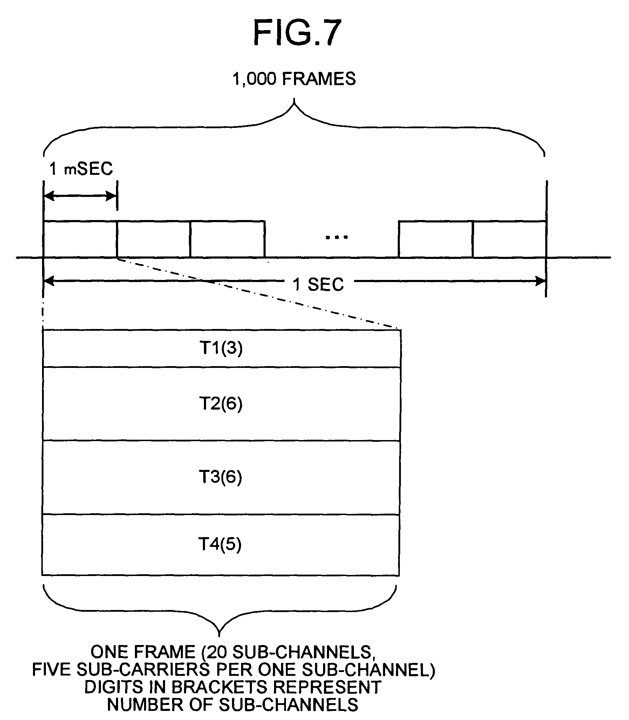

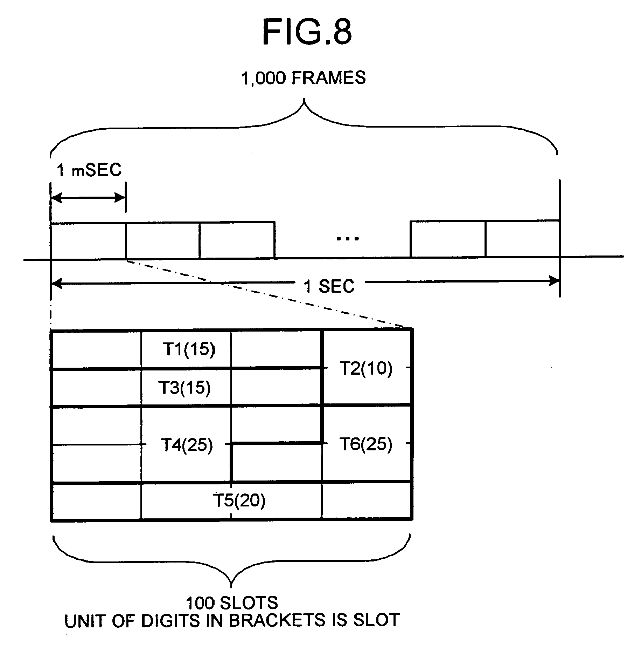

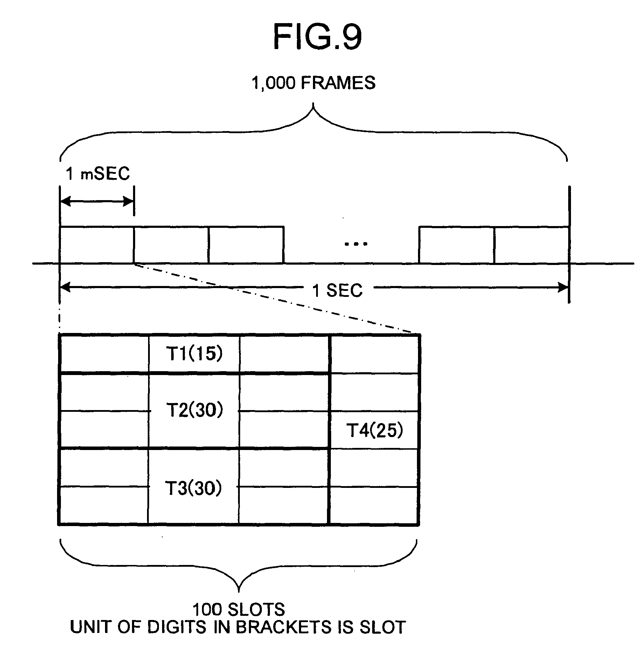

Fig. 4 to Fig. 9 are schematics for illustrating resource assignment on a radio frame transmitted by the radio base station. The axis of abscissa represents time and the axis of ordinate represents frequency. Fig. 4 and Fig. 5 illustrate examples for which one frame is divided into, for example, 100 slots in the direction of the time axis as in time division multiplexing (TDM) on a single carrier or orthogonal frequency division multiplexing (OFDM). Fig. 6 and Fig. 7 illustrate examples for each of which one frame is divided into 20 sub-channels (the number of sub-carriers per one channel are five) in the direction of the frequency axis as in orthogonal frequency division multiple access (OFDMA). Fig. 8 and Fig. 9 illustrate examples for each of which one frame is divided into five sub-channels (the number of sub-carriers per one sub-channel are five) in the direction of the frequency axis and into four symbols in the direction of the time axis in OFDMA.

The states of resource assignment shown in Fig. 4, Fig. 6, and Fig. 8 correspond to the state of the connection administration table shown in Fig. 2. The states of resource assignment shown in Fig. 5, Fig. 7, and Fig. 9 correspond to the state of the connection administration table shown in Fig. 3. As described above, in the present embodiment, the scheme may be a scheme that divides one frame in the direction of the time axis or may be a scheme that divides one frame in the direction of the frequency axis. In the case of the scheme that divides in the direction of the frequency axis, in the description of this specification, a sub-channel or a sub-carrier corresponds to a slot, one sub-channel corresponds to five slots, and one sub-carrier corresponds to one slot. In the case of the scheme that divides in both of the directions of the frequency axis and the time axis, in the description of the specification, a combination of a sub-channel or a sub-carrier, and a symbol corresponds to a slot, one sub-channel X one symbol corresponds to five slots, and one sub-carrier X one symbol corresponds to one slot.

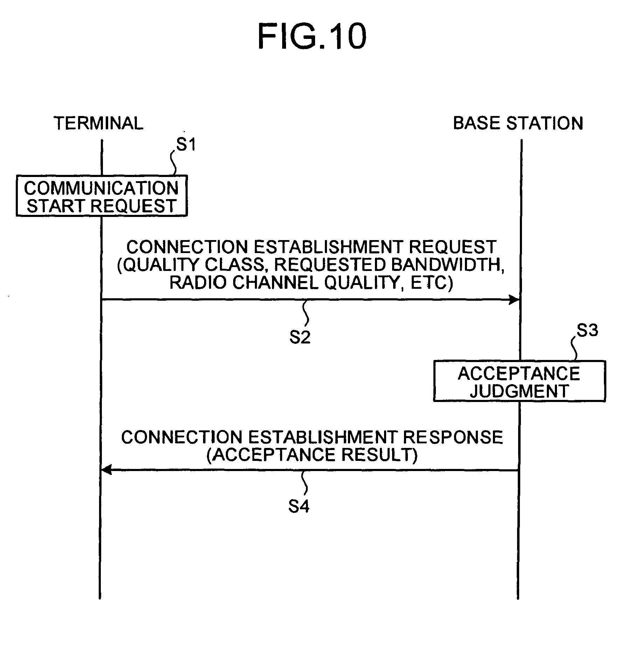

Fig. 10 illustrates a connection starting sequence. As shown in Fig. 10, a communication start request is generated being triggered by the fact that the terminal has been energized or that an application has been started up at the terminal (step S1), and a connection establishment request is issued from the terminal to the base station (step S2). When the base station has received the connection establishment request from the terminal, the base station executes acceptance judgment (step S3) and notifies the judgment result using a connection establishment response (step S4).

The connection establishment request to the base station contains information including the quality class (bandwidth guaranteed, best effort, etc.) of the connection requested by the terminal, the bandwidth requested by the terminal, the quality of the radio channel, etc. The quality of the radio channel may be notified of from the terminal to the base station in other piece of information (notice) than that of the information of the connection establishment request. In this case, the quality of the radio channel needs not to be included in the information of the connection establishment request and the base station has already grasped the quality of the radio channel of the terminal when the base station receives the connection establishment request. The connection establishment request contains identifying information of the terminal type. In WiMAX, as the identifying information of the terminal type, for example, the version information of the MAC header may be utilized.

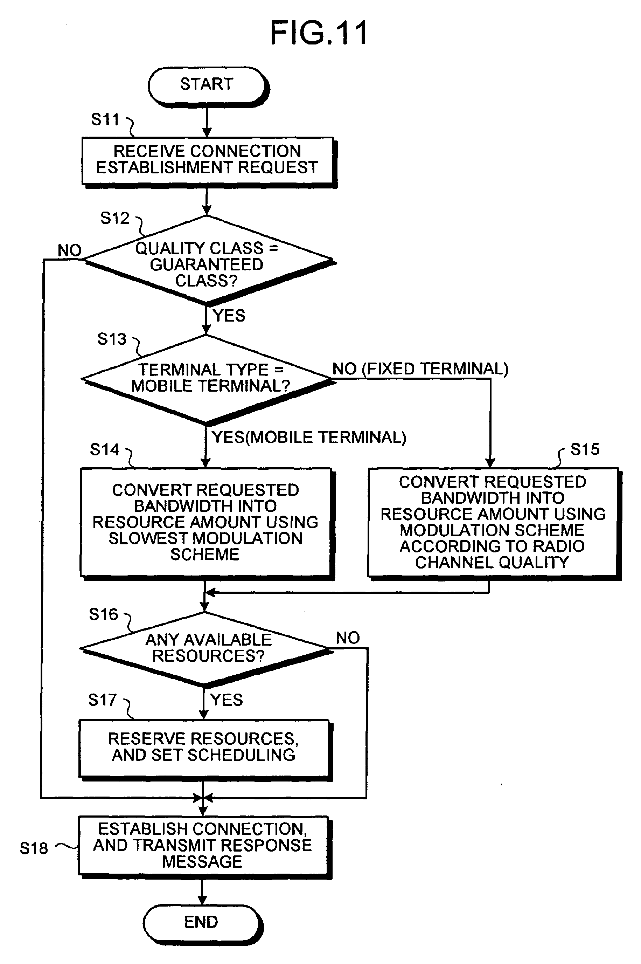

Fig. 11 is a flowchart of an acceptance judging process. As shown in Fig. 11, when the acceptance judging process has been started and the transmitting/receiving unit 1 receives a connection establishment request from a terminal (step S11), the transmitting/receiving unit 1 delivers the connection establishment request to the acceptance judging unit 6 through the buffer unit 2. The acceptance judging unit 6 decrypts a connection establishment request message, extracts parameters contained in the message, and judges the quality class of the requested connection (step S12). The judgment of the quality class is to judge whether the quality class is the guaranteed class. The guaranteed class is the bandwidth-guaranteed class.

When the guaranteed class is the bandwidth-guaranteed class as disclosed as a result of the judgment, (step S12: YES), whether the type of the terminal is a mobile terminal is further judged by the terminal-type judging unit 4 (step S13). When the terminal is a mobile terminal as disclosed as a result of this judgment, (step S13: YES), the acceptance judging unit 6 converts the requested bandwidth into the amount of resources necessary for modulating using the slowest modulation scheme (step S14). When the terminal is a fixed terminal (step S13: NO), based on the quality of the radio channel contained in the connection establishment request message as a parameter, the acceptance judging unit 6 determines a modulation scheme usable with the quality. The acceptance judging unit 6 converts the requested bandwidth into the amount of resources necessary for modulating using the determined modulation scheme (step S15). The quality of the radio channel may be notified of from the terminal to the base station in other massage than the connection establishment request message.

Then, the acceptance judging unit 6 checks whether an available resource amount larger than the necessary resource amount obtained at step S14 or step S15 is remained by referring to the connection administration table 7 of the resource administering unit 5 (step S16). When sufficient available resources are remained (step S16: YES), the acceptance judging unit 6 reserves the resources for the connection through which the connection establishment request has been received at step S11, and set the connection administration table 7 such that the scheduling unit 3 assign the radio resources as a connection of the bandwidth-guaranteed class (step S17).

The acceptance judgment unit 6 creates a connection establishment response message containing the result of the acceptance judgment, and transmits the message to the terminal through the buffer unit 2 and the transmitting/receiving unit 1 (step S18). Thus, the acceptance judgment process is ended. When the quality class of the requested connection is not the bandwidth-guaranteed class as disclosed as a result of the judgment at step S12, (step S12: NO) and when the available resources are insufficient as disclosed as a result of the judgment at step S16 (step S16: NO), the process is advanced to step S18 and the connection establishment message is returned to the terminal, and the acceptance judging process is ended.

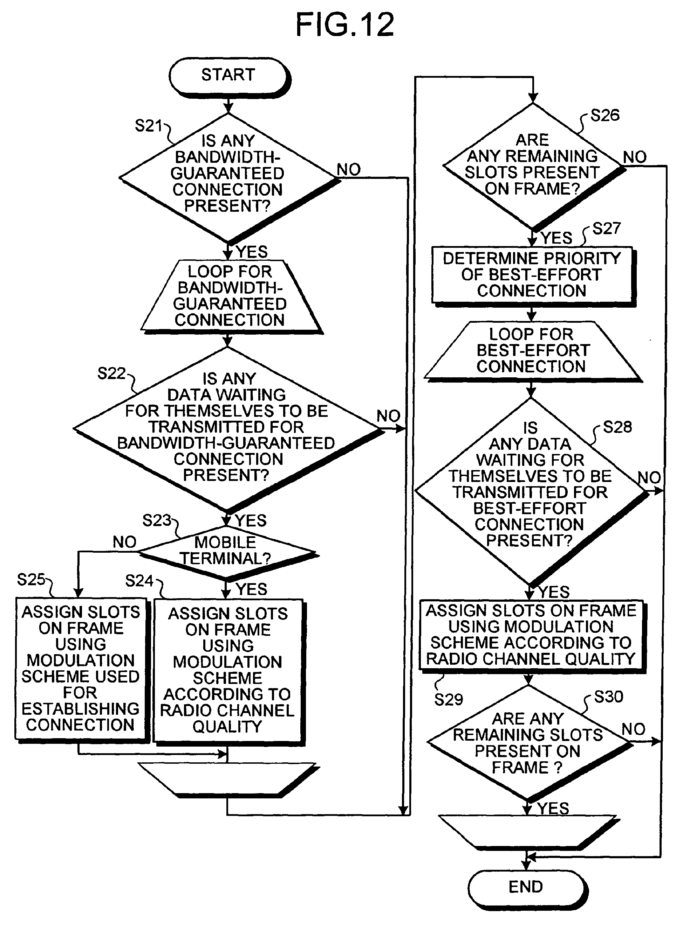

Fig. 12 is a flowchart of a radio-resource-assignment scheduling process. As shown in Fig. 12, when the radio-resource-assignment scheduling process has been started, a resource assigning process for a connection requiring the bandwidth guarantee (hereinafter, "bandwidth-guaranteed connection") is executed. In this process, the scheduling unit 3 checks whether any bandwidth-guaranteed connection has been established by referring to the connection administration table 7 (step S21).

When bandwidth-guaranteed connections have been established (step S21: YES), for all the bandwidth-guaranteed connections (in the example shown in Fig. 2, connections of the terminals T1 to T4), a radio resource assigning process loop of the following steps S22 to S25 is executed for each connection. In this process loop, whether data waiting for themselves to be transmitted of the bandwidth-guaranteed connection (for example, the connection of the terminal T1) are present in the buffer unit 2 is checked (step S22).

When data waiting for themselves to be transmitted are present as disclosed as a result of the check (step S22: YES), whether the terminal using this connection is a mobile terminal or a fixed terminal is checked by referring to the connection administration table 7 (step S23). When the terminal is a mobile terminal (step S23: YES), a modulation scheme usable with the quality of the radio channel at that time point is selected, and the number of slots necessary for guaranteeing a reserved bandwidth when modulation is executed using the selected modulation scheme is obtained, and assignment of slots on a frame is executed (step S24).

When the terminal is a fixed terminal (step S23: NO), the number of slots necessary for guaranteeing a reserved bandwidth when modulation is executed using the modulation scheme used for establishing the connection is obtained, and assignment of slots on a frame is executed (step S25). Assignment of slots is executed in the same manner for the remaining bandwidth-guaranteed connections.

When the slot assignment for all the bandwidth-guaranteed connections has been finished, a resource assignment process for the connections having the quality class of "best effort" (in the example shown in Fig. 2, the terminals T5 and T6: hereinafter, "best-effort connections") is executed. When no bandwidth-guaranteed connection has been established (step S21: NO) and when no data waiting for themselves to be transmitted of the bandwidth-guaranteed connections are present (step S22: NO), the process is advanced to the resource assigning process for the best-effort connections.

In this process, the scheduling unit 3 checks whether slots not yet assigned are remained on the frame. When slots are remained, the scheduling unit 3 further checks whether any best-effort connection has been established by referring to the connection administration table 7 (step S26). When no slots assignable to the best-effort connections are remained or when no best-effort connection has been established (step S26: NO), the resource assigning process for the best-effort connections is not executed and the radio-resource-assignment scheduling process is ended.

When a best-effort connection has been established and assignable slots are remained (step S26: YES), priority in executing the slot assignment is determined (step S27). The radio resource assigning process loop of the following steps S28 to S30 is executed to the best-effort connections in descending order of the priority thereof. In this process loop, whether the data waiting for themselves to be transmitted of the best-effort connection (for example, the connection of the terminal T5) are present in the buffer unit 2 is checked (step S28).

When the data waiting for themselves to be transmitted are present as disclosed as a result of the check (step S28: YES), a modulation scheme usable with the quality of the radio channel at that time point is selected, and the number of slots necessary for transmitting the reserved data when modulation is executed using the selected modulation scheme is obtained, and assignment of slots on a frame is executed (step S29). While available slots are remained on the frame (step S30: YES), slots are assigned in the same manner for the remaining best-effort connections.

When all the slots on the frame have been assigned (step S30: NO) or when the data waiting for themselves to be transmitted of all the best-effort connections have been assigned with the slots (step S28: NO), the resource assigning process for the best-effort connections has been ended and the radio-resource-assignment scheduling process has been ended. When this scheduling process has been ended, an assignment map such as an example shown in, for example, Fig. 4 or Fig. 6 is created as the result of the scheduling. The buffer unit 2 creates a radio frame based on this created map. The created radio frame is transmitted from the base station to the terminal through the transmitting/receiving unit 1. The above radio-resource-assignment scheduling process is basically executed for one frame that is a unit time.

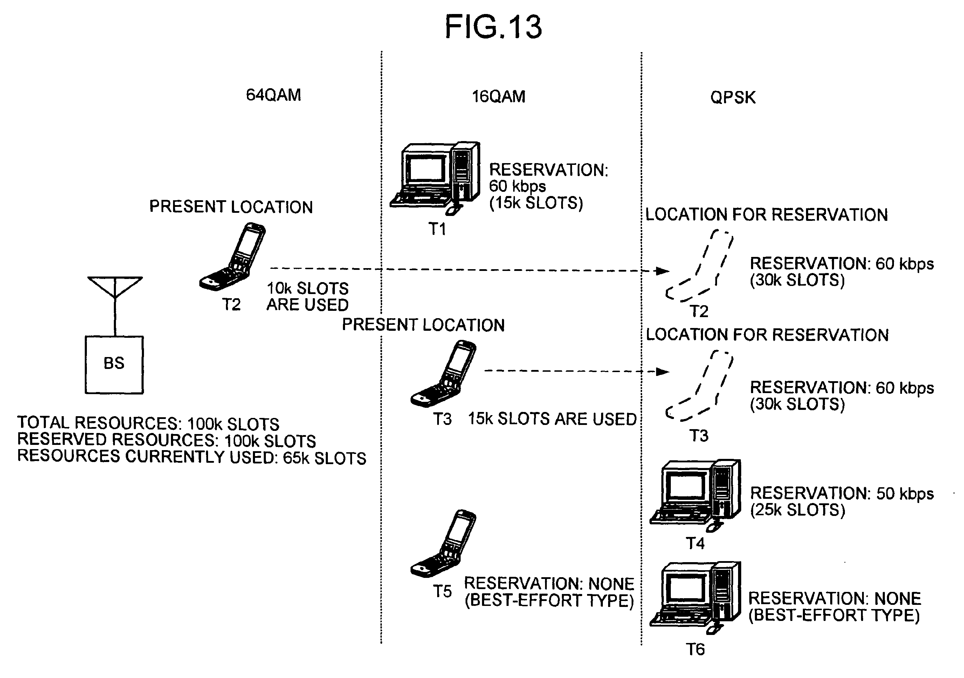

Fig. 13 is a schematic for illustrating the radio resource assignment executed when a connection between a terminal and the base station is established. As shown in Fig. 13, it is assumed that the total assignable resource amount at the radio base station (BS) is 100k slots; and, at a time point, the mobile terminal T2 is present in an area that allows the mobile terminal T2 to use the modulation scheme of 64-QAM; the fixed terminal T1, the mobile terminal T3, and the mobile terminal T5 are present in an area that allows those terminals to use the modulation scheme of 16-QAM; and the fixed terminal T4 and the fixed terminal T6 are present in an area that allows those terminals to use the modulation scheme of QPSK.

The numbers of transmission bits per one symbol of 64-QAM, 16-QAM, and QPSK are assumed to be respectively six bits, four bits, and two bits. Communication is started in order of the fixed terminal T1, the mobile terminal T2, the mobile terminal T3, the fixed terminal T4, the mobile terminal T5, and the fixed terminal T6. Each terminal is assumed to request a bandwidth guarantee of 60 kilo bits per second (kbps). The acceptance judgment result in this case is as follows.

Because the modulation scheme of 16-QAM is used for the connection with the fixed terminal T1, 15k slots are necessary to guarantee a bandwidth of 60 kbps. Therefore, the base station reserves resources of 15k slots for this connection and permits acceptance. The modulation scheme of 64-QAM can be used for the connection with the mobile terminal T2. However, assuming that the usable modulation scheme is the slowest QPSK due to move of the mobile terminal T2, etc., the base station reserves resources of 30k slots for this connection and permits acceptance.

Though the modulation scheme of 16-QAM can be used for the connections with the mobile terminal T3, the base station reserves resources of 30k slots and permits acceptance for the same reason for the mobile terminal T2. Because the modulation scheme of QPSK is used for the connections with the fixed terminal T4, 30k slots are necessary to guarantee a bandwidth of 60 kbps. However, the resources of the total of 75k slots have been already reserved for the fixed terminal T1, the mobile terminal T2, and the mobile terminal T3. Therefore, the base station permits acceptance of this connection for the radio resources of remaining 25k slots. Thereby, the fixed terminal T4 can communicate at a throughput of 50 kbps.

Because all the radio resources have been already reserved by the four bandwidth-guaranteed connections described above, the requests for bandwidth guarantee for the connections with the mobile terminal T5 and the fixed terminal T6 can not be accepted. Therefore, for these connections, connections are established as best-effort connections. When resources are assigned assuming that all the terminals are mobile terminals without distinguishing the terminal type, the base station, for example, reserves resources of 30k slots and permits acceptance for the connection with the fixed terminal T1 for the same reason for the mobile terminal T2.

In this case, because resources of the total of 90k slots have been reserved for the fixed terminal T1, the mobile terminal T2, and the mobile terminal T3, radio resources of only the remaining 10k slots can be reserved for the connection with the fixed terminal T4. Therefore, the fixed terminal T4 can communicate only at a throughput of 20 kbps. As in the embodiment, the use efficiency of the radio resources can be improved by distinguishing the terminal type and, therefore, the throughput of the base station can be improved.

For the radio resource reservation described above, in practice, because the modulation scheme of 64-QAM is used for the connection with the mobile terminal T2, the resources used for this connection do not exceed 10k slots. Because the modulation scheme of 16-QAM is used for the connection with the mobile terminal T3, the resources used for this connection do not exceed 15k slots. Therefore, because the resource amount actually used is less than the resource amount reserved for each of the mobile terminal T2 and the mobile terminal T3, excessive resources are generated.

In this example, resources of the total of 35k slots are excessive. These excessive resources are assigned to the connections with the mobile terminal T5 and the fixed terminal T6, that have been accepted as best-effort connections. An example of assigning resources of 20k slots and 15k slots respectively to the mobile terminal T5 and the fixed terminal T6 is the connection administration table 7 shown in Fig. 2. By doing this, the radio resources are not wasted and can be effectively used. Therefore, though bandwidths are not guaranteed, opportunities for more terminals to communicate with a base station can be increased.

In Fig. 13, it is assumed that time has passed and the quality of the radio channels of the mobile terminal T2 and the mobile terminal T3 are degraded because, for example, those terminals have gone away from the base station. For example, it is assumed that the state has been shifted to a state where the modulation scheme of QPSK can be used for the connections respectively with the mobile terminal T2 and the mobile terminal T3. In this case, the resources used for these connections are equal to 30k slots that have been reserved when the connections have been established. Therefore, the total of resources of 100k slots are used for the fixed terminal T1, the mobile terminal T2, the mobile terminal T3, and the fixed terminal T4.

Therefore, the assigned amount of the resources is zero for the mobile terminal T5 and the fixed terminal T6 that have been accepted to establish best-effort connections. However, the guarantee of the bandwidth made when the acceptance has been permitted is maintained for the connections of the fixed terminal T1, the mobile terminal T2, the mobile terminal T3, and the fixed terminal T4. Fig. 3 shows the connection administration table 7 for this case.

The bandwidth control method described in the embodiment can be realized by executing a program prepared in advance on a computer such as a personal computer, a work station, etc. This program is recorded in a computer-readable recording medium such as a hard disk, a flexible disk, a compact-disc read-only memory (CD-ROM), a magneto optical (MO) disk, a digital versatile disk (DVD), etc., and is executed by being read from the recording medium by the computer. This program may be a transmission medium distributable through a network such as the Internet, etc.

According to the embodiments of the present invention described above, it is possible to realize bandwidth-guaranteed communication in a communication system that uses the adaptive modulation scheme.

Although the invention has been described with respect to a specific embodiment for a complete and clear disclosure, the appended claims are not to be thus limited but are to be construed as embodying all modifications and alternative constructions that may occur to one skilled in the art which fairly fall within the basic teaching herein set forth.

## Claims

1. A base station apparatus that communicates with a terminal, using a modulation scheme that is switched according to communication quality, comprising:
a receiving unit configured to receive a bandwidth reservation request from the terminal;
a terminal-type judging unit configured to judge a type of the terminal based on the bandwidth reservation request; and
an acceptance judging unit configured to judge whether to accept the bandwidth reservation request, wherein
when the terminal is judged to be a fixed terminal, the acceptance judging unit converts a bandwidth requested in the bandwidth reservation request into a first resource amount necessary for a modulation scheme that has been used at the time of receiving the bandwidth reservation request, and judges whether to accept the bandwidth reservation request based on the first resource amount, and
when the terminal is judged to be a mobile terminal, the acceptance judging unit converts the bandwidth requested in the bandwidth reservation request into a second resource amount necessary for a slow modulation scheme among a plurality of modulation schemes, and judges whether to accept the bandwidth reservation request based on the second resource amount.

2. The base station apparatus according to claim 1, further comprising a scheduling unit configured to modulate data using the slow modulation scheme and to assign the resources necessary for data transmission between the base station and the mobile terminal, for a connection for which the bandwidth reservation request is accepted.

3. The base station apparatus according to claim 1, further comprising a scheduling unit configured to judge whether a modulation scheme having a higher speed than that of the slow modulation scheme is usable for a connection for which the bandwidth reservation request from the mobile terminal is accepted, to modulate data, and to assign resources necessary for data transmission between the base station apparatus and the mobile terminal, wherein
when the modulation scheme having a higher speed is usable, the scheduling unit modulates data using the modulation scheme having a higher speed, and
when the modulation scheme having a higher speed is not usable, the scheduling unit modulates data using the slow modulation scheme.

4. The base station apparatus according to claim 1, further comprising a scheduling unit configured to modulate data, and to assign resources necessary for data transmission between the base station apparatus and the terminal, wherein
for a connection for which the bandwidth reservation request from the mobile terminal is accepted, the scheduling unit judges whether a modulation scheme having a higher speed than that of the slow modulation scheme is usable, modulates data using the modulation scheme having a higher speed when the modulation scheme having a higher speed is usable, modulates data using the slow modulation scheme when the modulation scheme having a higher speed is not usable, and assigns resources necessary for data transmission between the base station apparatus and the mobile terminal, and
for a connection for which the bandwidth reserve request from the fixed terminal is accepted, the scheduling unit modulates data in a modulation scheme that has been used at the time of converting the bandwidth into the first resource amount, and assigns resources necessary for data transmission between the base station apparatus and the fixed terminal.

5. The base station apparatus according to claim 3, wherein, for the connection for which the bandwidth reservation request from the mobile terminal is accepted, when the scheduling unit modulates the data using the modulation scheme having a higher speed, the scheduling unit assigns a difference between the resource amount assigned for the data transmission between the base station apparatus and the mobile terminal and the second resource amount, to data transmission in a connection with another terminal.

6. The base station apparatus according to claim 4, wherein, for the connection for which the bandwidth reservation request from the mobile terminal is accepted, when the scheduling unit modulates the data using the modulation scheme having a higher speed, the scheduling unit assigns a difference between the resource amount assigned for the data transmission between the base station apparatus and the mobile terminal and the second resource amount to data transmission in a connection with another terminal.

7. The base station apparatus according to claim 1, wherein the terminal type judging unit judges a type of the terminal based on version information of a media access control header included in the bandwidth reservation request.

8. The base station apparatus according to claim 1, wherein the terminal type judging unit judges the terminal to be a mobile terminal when the terminal type judging unit receives identification information from the terminal, the identification information indicating that the terminal is a mobile terminal, and judges the terminal to be a fixed terminal when the terminal type judging unit receives no identification information from the terminal.

9. The base station apparatus according to claim 1, wherein the terminal type judging unit judges the terminal to be a mobile terminal when the terminal type judging unit receives, from the terminal, identification information indicating that the terminal is a mobile terminal, and judges the terminal to be a fixed terminal when the terminal type judging unit receives, from the terminal, identification information indicating that the terminal is a fixed terminal.

10. The base station apparatus according to claim 1, wherein the terminal type judging unit judges the terminal to be a fixed terminal when the terminal type judging unit receives identification information from the terminal, the identification information indicating that the terminal is a fixed terminal, and judges the terminal to be a mobile terminal when the terminal type judging unit receives no identification information from the terminal.

11. A terminal that communicates with a base station apparatus, using a modulation scheme that is switched according to communication quality, wherein
the terminal transmits identification information indicating that the terminal is a mobile terminal to the base station apparatus when the terminal makes a bandwidth reservation request to the base station apparatus.

12. A terminal that communicates with a base station apparatus, using a modulation scheme that is switched according to communication quality, wherein
the terminal transmitting identification information indicating that the terminal is a fixed terminal to the base station apparatus when the terminal makes a bandwidth reservation request to the base station apparatus.

13. A bandwidth control method used in a communication using a modulation scheme that is switched according to a communication quality, the bandwidth control method comprising:
receiving a bandwidth reservation request from a terminal;
judging a type of the terminal;
converting a bandwidth requested in the bandwidth reservation request into a resource amount; and
judging whether to accept the bandwidth reservation request based on the resource amount, wherein
when the terminal is judged to be a fixed terminal at the judging a type, the converting includes converting the bandwidth into a first resource amount necessary for a modulation scheme that has been used at the time of receiving the bandwidth reservation request, and the judging whether to accept the bandwidth reservation request includes judging based on the first resource amount, and
when the terminal is judged to be a mobile terminal, the converting includes converting the bandwidth into a second resource amount necessary for a slow modulation scheme among a plurality of modulation schemes, and the judging whether to accept the bandwidth reservation request includes judging based on the second resource amount.

14. The bandwidth control method according to claim 13, further comprising:
modulating data using the slow modulation scheme, for a connection for which the bandwidth reservation request is accepted; and
assigning the resources necessary for data transmission between the base station and the mobile terminal.

15. The bandwidth control method according to claim 13, further comprising:
judging whether a modulation scheme having a higher speed than that of the slow modulation scheme is usable for a connection for which the bandwidth reservation request from the mobile terminal is accepted;
modulating data; and
assigning resources necessary for data transmission between the base station apparatus and the mobile terminal, wherein
when the modulation scheme having a higher speed is usable, the modulating includes modulating data using the modulation scheme having a higher speed, and
when the modulation scheme having a higher speed is not usable, the modulating includes modulating data using the slow modulation scheme.

16. The bandwidth control method according to claim 13, further comprising:
modulating data;
assigning resources necessary for data transmission between the base station apparatus and the terminal;
judging, for a connection for which the bandwidth reservation request from the mobile terminal is accepted, whether a modulation scheme having a higher speed than that of the slow modulation scheme is usable; and
assigning resources necessary for data transmission between the base station apparatus and the terminal, wherein
for the connection for which the bandwidth reservation request from the mobile terminal is accepted, the modulating includes modulating the data in the modulation scheme having a higher speed when the modulation scheme having a higher speed is usable, and modulating data using the slow modulation scheme when the modulation scheme having a higher speed is not usable, and the assigning includes assigning resources necessary for data transmission between the base station apparatus and the mobile terminal, and
for a connection for which the bandwidth reserve request from the fixed terminal is accepted, the modulating data includes modulating the data in a modulation scheme that has been used at the time of converting the bandwidth into the first resource amount, and assigning resources necessary for data transmission between the base station apparatus and the fixed terminal.

17. The bandwidth control method according to claim 15, wherein, for the connection for which the bandwidth reservation request from the mobile terminal is accepted, when the data is modulated using the modulation scheme having a higher speed, the assigning includes assigning a difference between the resource amount assigned for the data transmission between the base station apparatus and the mobile terminal and the second resource amount to data transmission in a connection between the base station apparatus and another terminal.

18. The bandwidth control method according to claim 16, wherein, for the connection for which the bandwidth reservation request from the mobile terminal is accepted, when the data is modulated using the modulation scheme having a higher speed, the assigning includes assigning a difference between the resource amount assigned for the data transmission between the base station apparatus and the mobile terminal and the second resource amount to data transmission in a connection between the base station apparatus and another terminal.
